(19)

Europäisches
Patentamt
European
Patent Office
Office européen
des brevets

(11)  **EP 2 477 406 B1**

(12)  **EUROPEAN PATENT SPECIFICATION**

(45) Date of publication and mention
of the grant of the patent:
**08.07.2015 Bulletin 2015/28**

(51) Int Cl.:
*H04N 13/00* (2006.01)    *H04N 7/01* (2006.01)

(21) Application number: **11000274.8**

(22) Date of filing: **14.01.2011**

(54) **A method and a system for determining a video frame type**

Verfahren und Vorrichtung zur Bestimmung eines Videobildformats

Procédé et dispositif d'identification de type d'image vidéo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.07.2012 Bulletin 2012/29**

(73) Proprietor: **Advanced Digital Broadcast S.A.
1292 Chambesy (CH)**

(72) Inventor: **Szajna, Tomasz
65-119 Zielona Góra (PL)**

(74) Representative: **Pawlowski, Adam
Eupatent.PL
ul. Zeligowskiego 3/5
90-752 Lodz (PL)**

(56) References cited:
**US-A1- 2002 163 595**

- **TAO ZHANG: "3D Image format identification by
image difference", MULTIMEDIA AND EXPO
(ICME), 2010 IEEE INTERNATIONAL
CONFERENCE ON, IEEE, PISCATAWAY, NJ,
USA, 19 July 2010 (2010-07-19), pages 1415-1420,
XP031761509, ISBN: 978-1-4244-7491-2**

EP 2 477 406 B1

**Description**

The present invention relates to determining video frame type, in particular distinguishing between a two-dimensional (2D) and three-dimensional (3D) video frames.

Stereoscopic video displays can be used to display both 2D and 3D video signals, by processing the frames of the signals depending on the type of signal. The type of the signal can be specified manually by the user, which can be troublesome for inexperienced users. The type of signal can be also specified by supplementary data included in the signal itself or by a supplementary signal, which requires the video display unit to be able to decode and recognize the supplementary data or the supplementary signal.

A US patent application US2009/0009508 presents an apparatus and a method for driving a 2D/3D switchable display, which includes an image mode determination unit determining whether input image signals of continuous frames are in a 2D mode or 3D mode. The 3D mode is recognized by determining a syntax indicating a stereo or a multiview image included in the header information of the input image signal. Alternatively, the image mode can be determined based on the presence of a stereo sync signal. Therefore, the mode determination requires data or signals supplementary to the basic image data.

A PCT patent application WO2010/014973 presents a method and an apparatus for encoding or tagging a video frame which provide a way to indicate, to a receiver, whether the video content is 3-D content or 2-D content, by replacing lines of at least one video frame in a 3-D content with a specific color or pattern. Therefore, the method is useful only for receivers, which are able to recognize the specific color or patterns as an indication of a 3-D content.

An article "3D Image format identification by image difference" (Multimedia and Expo (ICME), 2010 IEEE International Conference on, IEEE, Pitscataway, NJ, USA, 19 July 2010, pages 1415-1420, ISBN: 978-1-4244-. 7491-2) discloses a method to detect whether an image is a 2D image or a 3D image encoded with a pair of stereo images by computing an edge map resulted from image differences between the left and right view images and using statistics from the distribution of edge widths combined with structure similarity analysis to detect the existence of a 3D format and to identify the format.

A US patent application US2002/163595 discloses an internace motion artifact detector which identifies video image spatial frequencies characteristic of motion artifacts to indicate erroneous motion artifact detection. The detector analyzes a video frame matrix describing the contents of the video frame, but is riot applicable to determining whether the frame is of a 2D or 3D type.

In case the display lacks the functionality of decoding supplementary data included in the signal or is not able to decode supplementary signals describing the video type, or the video signal contains only basic image contents without the image type indicated, the signal must be recognized in an alternative way.

The aim of the present invention is to provide a method for determining the video frame type by analyzing video signals having no or unknown indication of video frame type.

The object of the invention is a computer-implemented method for determining a video frame type according to the attached claims.

The object of the invention is also a computer program comprising program code means for performing all the steps of the computer-implemented method of the invention when said program is run on a computer, as well as a computer readable medium storing computer-executable instructions performing all the steps of the computer-implemented method of the invention when executed on a computer.

Another object of the invention is a system for determining a video frame type according to the attached claims.

The present invention will be shown by means of an exemplary embodiment on a drawing, in which:

Figs. 1A-1D show examples of typical 2D video frames.
Figs. 2A-2H show examples of typical 3D video frames of an Left-Right (LR) type.
Figs. 3A-3H show examples of typical 3D video frames of a Top-Bottom (TB) type.
Fig. 4 shows the common non-active image regions of a video frame.
Fig. 5 shows the structure of a system for determining video frame type.
Fig. 6 shows the procedure of operation of a frame compactor.
Fig. 7 shows the procedure of operation of a frame type detector.
Figs. 8A-8D show exemplary data plots for a mono frame.
Figs. 9A-9D show exemplary data plots for a 3D LR-type frame.
Fig. 10 shows an embodiment of a system for determining a video frame type according to the invention.

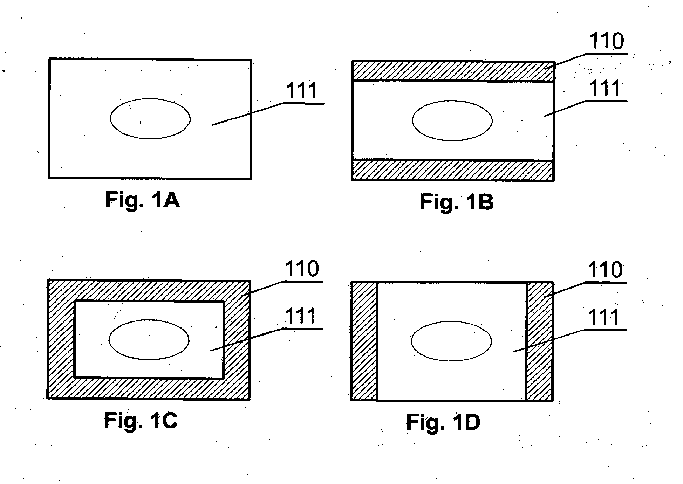

Figs. 1A-1D show examples of typical 2D video frames. The frame may comprise only an active image region 111 as shown in Fig. 1A. Alternatively, the 2D frame may further comprise a non-active image region 110, such as bars of a uniform color, e.g. black, at the top and bottom edges of the frame as shown in Fig. 1B or bars at the top, bottom, left and right edges of the frame as shown in Fig. 1C or bars at the left and right edges of the frame as shown in Fig. 1D.

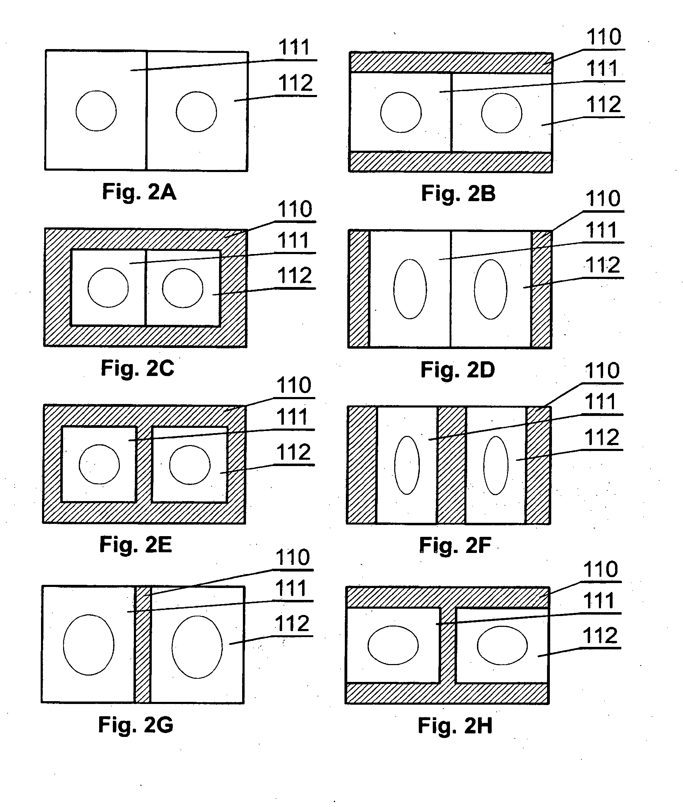

Figs. 2A-2H show examples of typical 3D video frames of a Left-Right (LR) type. Such frame, as shown in Fig. 2A, comprises two active image regions 111, 112, which define the content to be displayed for the left and right eye. The active regions 111, 112 may be scaled-down in the horizontal direction in order to fit into dimensions of a standardized 2D frame. A 3D frame may also contain non-active image regions 110, such as bars of a uniform color, e.g. black, at the top and bottom edges of the frame as shown in Fig. 2B, at the top, bottom, left and right edges of the frame as shown in Fig. 2C, at the left and right edges of the frame as shown in Fig. 2D, at the top, bottom, left and right edges of the frame and between the active regions as shown in Fig. 2E, at the left and right edges of the frame and between the active regions as shown in Fig. 2F, between the active regions as shown in Fig. 2G or at the top and bottom edges of the frame and between the active regions as shown in Fig. 2H.

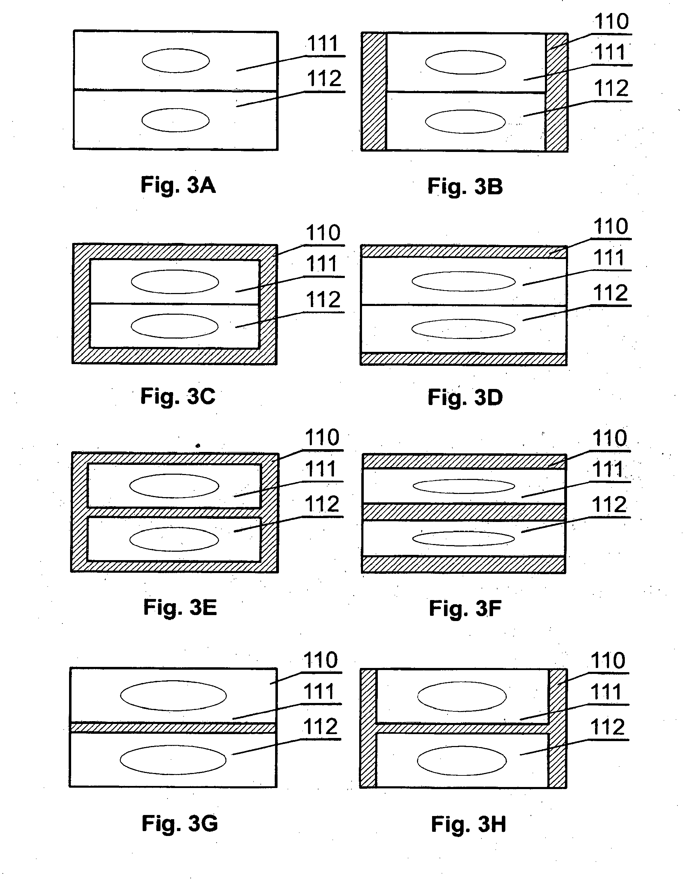

Figs. 3A-3H show examples of typical 3D video frames of a Top-Bottom (TB) type. Such frame, as shown in Fig. 3A, comprises two active image regions 111, 112, which define the content to be displayed for the left (e.g. the top region) and the right (e.g. the bottom region) eye. The active regions 111, 112 may be scaled-down in the vertical direction in order to fit into dimensions of a standard 2D frame. A 3D frame may also contain non-active image regions 110, such as: bars of a uniform color, e.g. black, at the left and right edges of the frame as shown in Fig. 3B, at the top, bottom, left and right edges of the frame as shown in Fig. 3C, at the top and bottom edges of the frame as shown in Fig. 3D, at the top, bottom, left and right edges of the frame and between the active regions as shown in Fig. 3E, at the top and bottom edges of the frame and between the active regions as shown in Fig. 3F, between the active regions as shown in Fig. 3G or at the left and right edges of the frame and between the active regions as shown in Fig. 3H.

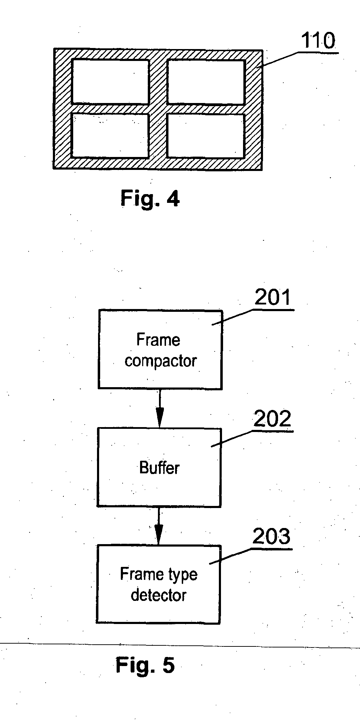

Therefore, for any 2D or 3D video frame, the most probable non-active regions 110 may form bars at the top, bottom, left, right, horizontal centre and vertical centre of the frame, as shown in Fig. 4.

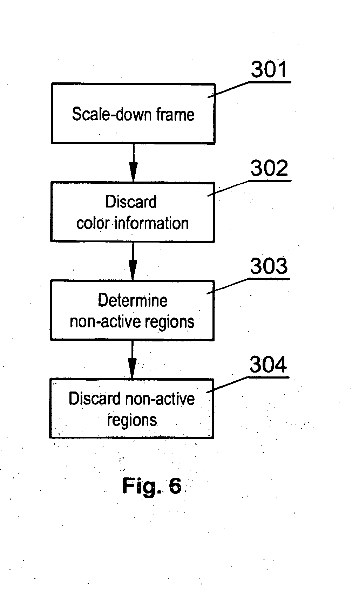

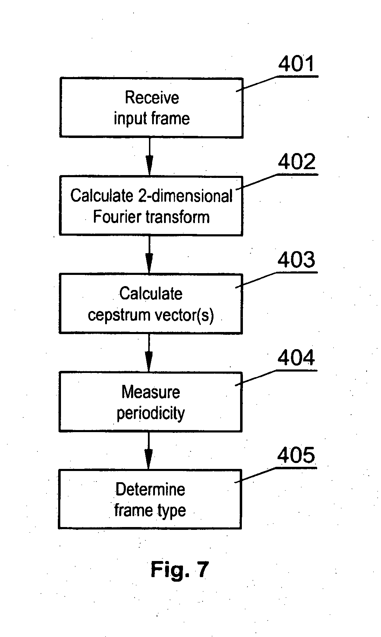

Fig. 5 shows the structure of a system for determining video frame type according to the invention. The system may comprise a frame compactor 201 configured to extract from the input video frames data representing an active region and discard the data representing the non-active region of the frame, according to the procedure shown in Fig. 6, and possibly to reduce the amount of data by scaling-down and/or discarding the color information. The compactor may increase the accuracy of operation of the frame type detector. The reduced frame representation is passed to a buffer 202, from which it is collected by a frame type detector 203 operating according to the procedure shown in Fig. 7 The frame type detector 203 provides an output specifying the type of the frame: that the frame is a 2D or a 3D frame, wherein for 3D frames the detector may indicate the type of frame as an LR frame or a TB frame. In a simple embodiment, the system may be adapted to distinguish only between mono frames and one type of 3D frames, i.e. LR-type or TB-type frames.

Fig. 6 shows the procedure of operation of the frame compactor 201. In step 301, the received input frame may be reduced for easier analysis, by scaling it down, i.e. reducing the size of the frame. Next, in step 302 the color information can be discarded, either by converting the frame contents into a grayscale or selecting contents of only one color channel. Next, in step 303 the frame is analyzed to detect the non-active regions, preferably in areas indicated in Fig. 4, namely in the bars located at the top, bottom, left, right, horizontal centre and vertical centre of the frame. The contents of the detected non-active regions are discarded in step 304 so as to generate a frame containing only data of active regions, as shown in Fig. 1A, 2A or 3A. The processing of a frame by the frame compactor 201 may be initiated after a change of the video input signal, for example a change of a channel in a television decoder, in order to determine the type of the new signal. Alternatively, the frame compactor 201 may be operated continuously, in order to detect change of type of the received signal, for example to detect a 2D commercial break in a 3D video film. In such a case, the frame compactor 201 may receive the frames with a specific frequency, preferably lower than the frame display rate, such as 2 frames per second, in order to minimize the computational load of the signal receiver.

Fig. 7 shows the procedure of operation of the frame type detector 203. The input frame is received in step 401 as a matrix describing its contents (pixel values). The frame can be optionally (further to, or instead of step 301 and operation of the frame compactor 201) compacted to reduce parallaxes between the left and right-eye part of the image and to reduce high-frequency components. In order to facilitate further computations of Fourier transform, e.g. by Fast Fourier Transform method, the image can be compacted to a size of at least one of its sides being a power of 2.

Next, a two-dimensional Fourier transform is calculated for the downscaled image in step 402, for example a 2-dimensional forward Discrete Fourier Transform, given by an equation:

$$X_{mn} = \text{DFT2}(\text{downscale}(A))$$

$$\text{DFT2}(x): X_{uv} = \sum_{m=0}^{N-1}\sum_{n=0}^{N-1} x_{mn}e^{\frac{-2\pi i(mu+nv)}{N}}$$

$$u = 0, 1, \ldots, N - 1$$

$$v = 0, 1, \ldots, N - 1$$

wherein

A is the input image

u, v are the frequency indices

m,n are the indices of pixel positions

N is the size of the X matrix (assuming the X matrix is square)

In step 403, the horizontal and/or vertical cepstrum vectors of the two-dimensional Fourier spectrum $X_{mn}$ are calculated. The cepstrum is the result of taking the Fourier transform of the log spectrum as if it were a signal, according to the equation:

$$H_{1\ldots\mu} = \left| \mathrm{DFT}(\log(|X_{(1,1\ldots\mu)}| + \varepsilon)) \right|$$

$$V_{1\ldots\mu} = \left| \mathrm{DFT}(\log(|X_{(1\ldots\mu,1)}| + \varepsilon)) \right|$$

wherein

$H_{1\ldots\mu}$ is the horizontal cepstrum vector

$V_{i\ldots\mu}$ is the vertical cepstrum vector

$\mu$ is a limit frequency

$\varepsilon$ is a small non-zero constant

In case the system adapted to distinguish only between mono frames and one type of 3D frames, i.e. LR-type or TB-type frames, then only the horizontal or vertical cepstrum vector is calculated.

If the input image is stereoscopic, the odd frequencies calculated in the spectrum will be substantially close to zero, and the even frequencies will be substantially non-zero, that is there will be even harmonics present in the spectrum, because the base image repeats with a constant period equal to half of the image size. As every second frequency in the spectrum is substantially zero, the spectrum itself has a strong periodic component. This component corresponds to the highest distinctive quefrency in the cepstrum. Therefore, if one side of the input image (e.g. the left or the top part) is similar to the other one (the right or the bottom part, respectively), there will be a highly distinguishable peak in the calculated cepstrum at the highest quefrency.

For the purposes of the present invention, in order to solve the problem of distinguishing between monoscopic and stereoscopic images (of the LR or TB type), only the horizontal and vertical periodicity of the spectrum is under concern, therefore it is not necessary to compute the whole two-dimensional cepstrum. Instead, it is enough to compute a horizontal cepstrum H for the part of the spectrum corresponding to vertical frequency equal to zero, and a vertical cepstrum V for the part of spectrum corresponding to horizontal frequency equal to zero. Therefore, a two-dimensional problem is reduced to two one-dimensional problems.

Furthermore, experiments have shown, that in most images the higher frequencies carry much less power than the lower frequencies, therefore the periodicity of the spectrum is much more expressed for lower frequencies, where the even frequencies are more likely to differ much from zero. This fact can be utilized by taking cepstrum from only some range of frequencies, i.e. frequencies lower than a limit frequency $\mu$. The limiting frequency $\mu$ is preferably lower than the highest frequency of the spectrum, for example equal to half of the highest frequency of the spectrum and equal to a power of 2 in order to facilitate calculation of the Fourier transform.

For discrete signals, a two-dimensional spectrum matrix $X_{mn}$ is created in step 402, but for processing in step 403 only horizontal and vertical vectors of this matrix are used, namely a horizontal vector $X_{(1,1\ldots\mu)}$ and a vertical vector $X_{(1\ldots\mu,1)}$. Only the absolute values of the vectors are needed for analysis.

A small constant $\varepsilon$ is added to avoid risk of a logarithm of zero.

Next, in step 404 the periodicity of the spectrum is measured, i.e. it is checked whether the spectrum is substantially periodic with a period equal to 2. The value of the highest quefrency coefficients of the cepstrum ($H_{\mu/2}$, $V_{\mu/2}$) are compared with an average value of the cepstrum. The average values $\hat{H}$ and $\hat{V}$ can be computed using the equations:

$$\hat{H} = \frac{1}{e-s} \sum_{i=s}^{e} |H_i|$$

$$\hat{V} = \frac{1}{e-s} \sum_{i=s}^{e} |V_i|$$

wherein

$s$, $e$ are respectively the starting and ending coefficients selected so as not to take into account respectively the first and the last coefficients of the cepstrum. The first coefficients of the cepstrum relate to an average value of the spectrum. In turn, the last coefficients may be high for a stereoscopic signal. Therefore, these coefficients should not be taken into account when calculating an average value for comparison with the value of the highest quefrency coefficient.

The measures of the horizontal and vertical periodicity of the spectrum, respectively h and v, are calculated as periodicity coefficients in step 404 by equations:

$$h = \begin{cases} \dfrac{H_{\mu/2}}{\hat{H}}, & for\, \hat{H} \neq 0 \\ NaN, & otherwise \end{cases}$$

$$v = \begin{cases} \dfrac{V_{\mu/2}}{\hat{V}}, & for\, \hat{V} \neq 0 \\ NaN, & otherwise \end{cases}$$

The measure is identified as "not a number" (NaN) if the average coefficient value is zero. In that case, the image type is undefined.

Next, the frame type is determined in step 405. In case one of the periodicity coefficients h, v is greater than a predefined periodicity threshold $\theta$, for example 2 (i.e. the value of the highest quefrency coefficient is at least 2 times higher than the average), this indicated a strong periodicity of the spectrum and the signal is defined as a stereoscopic signal of a LR-type or TB-type. Otherwise, the image has no periodicity and the signal is classified as a mono signal. In case both the vertical and horizontal coefficients are higher than the predefined periodicity threshold $\theta$, the signal type is determined according to the higher of the coefficients.

Alternatively, a soft-decision algorithm can be used to determine a probability of a frame type depending on the value of the measures of periodicity.

Various Fourier-related transforms can be used instead of the DFT transforms mentioned in the embodiment described above. The two-dimensional spectrum $X_{mn}$ can be calculated in step 402 using a transform of which every second base function has a periodicity equal to N/2, wherein N is the image size. The cepstrum vectors H, V calculated in step 403 are used to analyze whether the spectrum of step 402 is periodic with a period equal to 2 and therefore transforms such as DCT (Discrete Cosine Transform) can be used for this purpose as well.

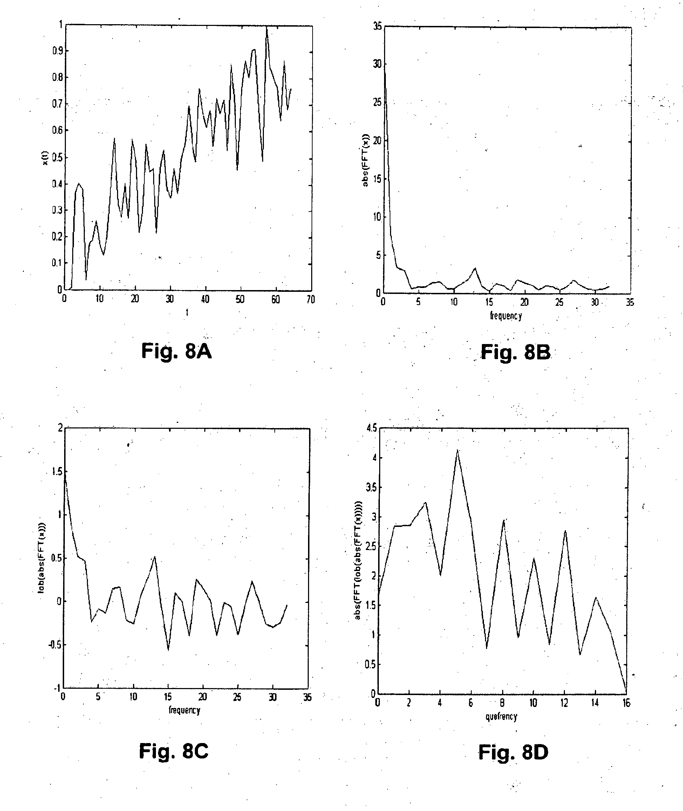

Figs. 8A-8D show exemplary data plots for a mono frame. Fig. 8A shows a plot of row values, wherein there is no relationship between the left and the right side of the frame. Fig. 8B shows an amplitude spectrum. Fig. 8C shows a logarithm of the amplitude spectrum. Fig. 8D shows the cepstrum. As shown in Fig. 8D, the value of the highest quefrency coefficient ($\mu/2$ = 16) is not higher than the average value.

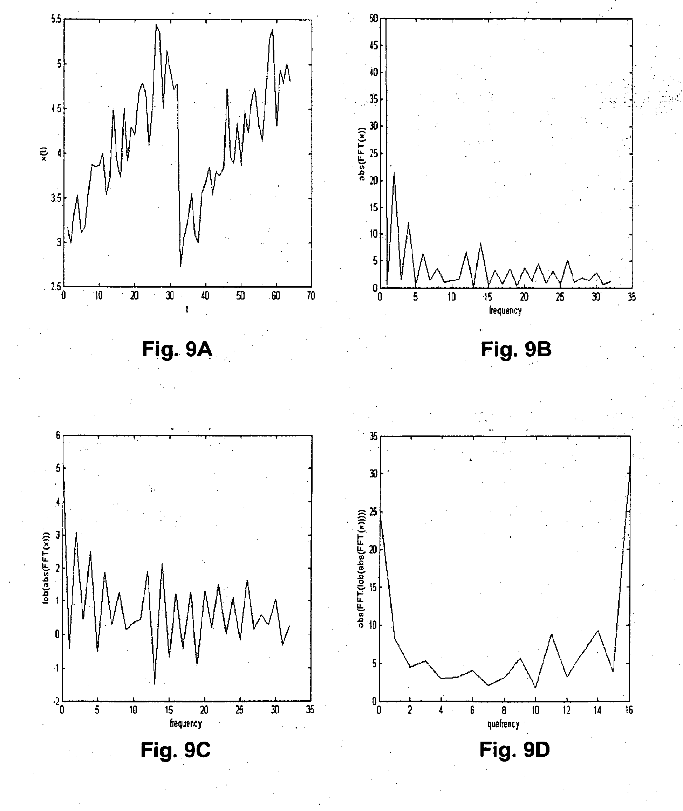

Figs. 9A-9D show exemplary data plots for a 3D LR-type frame. Fig. 8A shows a plot of row values, wherein there is a visible relationship between the left and right side of the frame. Fig. 9B shows an amplitude spectrum. It should be noted that as the left side is not perfectly equal to the right side of the frame, the odd spectrum coefficients have a small, non-zero magnitude. Fig. 9C shows a logarithm of the amplitude spectrum. Fig. 9D shows the cepstrum. As shown in Fig. 9D, the value of the highest quefrency coefficient ($\mu/2$ = 16) is noticeably higher than the average value.

Data plots for a 3D TB-type frame, calculated for column values, will be equivalent to the data plots of Figs. 9A-9D.

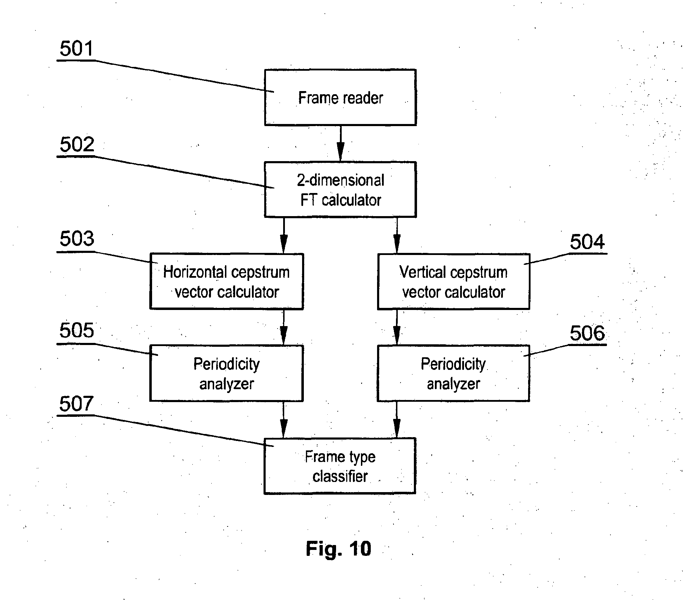

Fig. 10 shows an embodiment of a system for determining a video frame type according to the invention. The system comprises a frame reader 501 configured to receive a video frame matrix describing contents of the video frame. A Fourier Transform calculator 502 is configured to calculate a two-dimensional Fourier Transform spectrum ($X_{mn}$) of the contents of the video frame matrix, in a way equivalent to that described with reference to step 402. The spectrum is next processed by at least one cepstrum vector calculator 503, 504, one for a horizontal and the other for a vertical direction of the spectrum, configured to calculate a cepstrum vector ($H_{1...\mu}$, $V_{1...\mu}$) for respectively the horizontal and the vertical direction of the two-dimensional Fourier Transform spectrum ($X_{mn}$), in a way equivalent to step 403. Next, the calculated cepstra are analyzed by periodicity analyzers 505, 506 in order to determine a periodicity of the horizontal spectrum and of the vertical spectrum, in a way equivalent to step 404. The outputs of the analyzers 505, 506 are processed by a video frame classifier 507 configured to classify the video frame as a horizontal LR-type stereoscopic frame if the horizontal spectrum is determined as periodic and/or classifying the video frame as a vertical TB-type stereoscopic frame if the vertical spectrum is determined as periodic and classifying the video frame as a mono frame otherwise, in a way equivalent to step 405.

The frame type detector 203 can form a part of a multi-component system, in which a plurality of different frame type detectors are used, each configured to analyze the frame using a different algorithm configured to output a type coefficient indicative of a probability that the frame is of a 2D or 3D type, wherein the type coefficients from the frame type detectors are received by a controller configured to generate a predicted frame type indicator based on the received type coefficients.

In case the system according to the invention is embedded in a video display unit, the determined frame type can be used to select the method of processing the signal to be displayed. In case the system according to the invention is embedded in a video decoder, such as a television set-top box, the determined frame type can be used to select the method of processing the signal to be passed to a display unit, for example converting a 2D signal to a 3D format in case the display unit is set to receive 3D video signals.

It can be easily recognized, by one skilled in the art, that the aforementioned system and method for determining video frame type may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1.  A computer-implemented method for determining a video frame type, comprising the step of receiving a video frame matrix describing the contents of the video frame,
    **characterized in that** it further comprises the steps of:

    - calculating a two-dimensional Fourier Transform spectrum ($X_{mn}$) of the contents of the video frame matrix,
    - determining whether the two-dimensional Fourier Transform spectrum ($X_{mn}$) is periodic in a horizontal direction by determining a horizontal periodicity coefficient (h) by calculating a horizontal cepstrum vector ($H_{1...\mu}$) of the two-dimensional Fourier Transform spectrum ($X_{mn}$) and dividing the value of the coefficient ($H_{\mu/2}$) of the horizontal cepstrum vector, ($H_{1\ \mu}$) at the highest quefrency corresponding to a half of a limit frequency $\mu$ by an average value ($\hat{H}$) of the horizontal cepstrum vector ($H_{1...\mu}$), wherein the two-dimensional Fourier Transform spectrum ($X_{mn}$) is determined as periodic in the horizontal direction if the horizontal periodicity coefficient (h) is higher than a periodicity threshold ($\theta$) having a value of at least 2,
    - determining whether the two-dimensional Fourier Transform spectrum ($X_{mn}$) is periodic in a vertical direction by determining a vertical periodicity coefficient (v) by calculating a vertical cepstrum vector ($V_{1...\mu}$) of the two-dimensional Fourier Transform spectrum ($X_{mn}$) and dividing the value of the coefficient ($V_{\mu/2}$) of the vertical cepstrum vector ($V_{1...\mu}$) at the highest quefrency corresponding to a half of a limit frequency $\mu$ by an average value ($\hat{V}$) of the vertical cepstrum vector ($V_{1...\mu}$), wherein the two-dimensional Fourier Transform spectrum ($X_{mn}$) is determined as periodic in the vertical direction if the vertical periodicity coefficient (h) is higher than the periodicity threshold ($\theta$),
    - classifying the video frame as a horizontal left right type stereoscopic frame if the two-dimensional Fourier Transform spectrum ($X_{mn}$) is determined as periodic in the horizontal direction and/or classifying the video frame as a vertical top bottom type stereoscopic frame if the two-dimensional Fourier Transform spectrum ($X_{mn}$) is determined as periodic in the vertical direction and classifying the video frame as a mono frame otherwise;
- wherein the horizontal cepstrum vector ($H_{1\ldots\mu}$) and the vertical cepstrum vector ($V_{1\ldots\mu}$) of the two-dimensional Fourier Transform spectrum ($X_{mn}$) are calculated by calculating the Fourier transform of the log two-dimensional Fourier Transform spectrum ($X_{mn}$) according to the following equations:

$$H_{1\ldots\mu} = \left| \mathrm{DFT}(\log(|X_{(11\ldots\mu)}| + \varepsilon)) \right|$$

$$V_{1\ldots\mu} = \left| \mathrm{DFT}(\log(|X_{(1\ldots\mu 1)}| + \varepsilon)) \right|$$

wherein

$\varepsilon$ is a non-zero constant
$\mu$ is a limit frequency lower than the highest frequency of the two-dimensional Fourier Transform spectrum ($X_{mn}$);

- and wherein the average values ($\hat{H}$),($\hat{V}$) are calculated according to the following equations:

$$\hat{H} = \frac{1}{e-s} \sum_{i=s}^{e} |H_i|$$

$$\hat{V} = \frac{1}{e-s} \sum_{i=s}^{e} |V_i|$$

wherein
s and e are respectively the starting and ending coefficients which are different from respectively the first and the last coefficients of the respective cepstrum (H), (V).

2. The method according to claim 1, wherein the horizontal cepstrum vector ($H_{1\ldots\mu}$) is calculated for the part of the two-dimensional Fourier Transform spectrum ($X_{mn}$) corresponding to vertical frequency equal to zero and/or the vertical cepstrum vector ($V_{1\ldots\mu}$) is calculated for the part of the two-dimensional Fourier Transform spectrum ($X_{mn}$) corresponding to horizontal frequency equal to zero.

3. The method according to claim 1, wherein the horizontal cepstrum vector ($H_{1\ldots\mu}$) and/or the vertical cepstrum vector ($V_{1\ldots\mu}$) is calculated for frequencies below the limit frequency $\mu$ lower than the highest frequency of the two-dimensional Fourier Transform spectrum ($X_{mn}$).

4. A computer program comprising program code means for performing all the steps of the computer-implemented method according to any of claims 1-3 when said program is run on a computer.

5. A computer readable medium storing computer-executable instructions performing all the steps of the computer-implemented method according to any of claims 1-3 when executed on a computer.

6. A system for determining a video frame type the system comprising a frame reader (501) configured to receive a video frame matrix describing contents of the video frame,
**characterized in that** the system further comprises:

- a Fourier Transform calculator (502) configured to calculate a two-dimensional Fourier Transform spectrum ($X_{mn}$) of the contents of the video frame matrix;
- a horizontal periodicity analyzer (505) configured to determine a periodicity of the two-dimensional Fourier

Transform spectrum ($X_{mn}$) in a horizontal direction by a horizontal cepstrum vector calculator (503) configured to determine a horizontal periodicity coefficient (h) by calculating a horizontal cepstrum vector ($H_{1...\mu}$) of the two-dimensional Fourier Transform spectrum ($X_{mn}$) and dividing the value of the coefficient ($\hat{H}_{\mu/2}$) of the horizontal cepstrum vector ($H_{1...\mu}$) at the highest quefrency corresponding to a half of a limit frequency $\mu$ by an average value ($\hat{H}$) of the horizontal cepstrum vector ($H_{1...\mu}$); and to determine the two-dimensional Fourier Transform spectrum ($X_{mn}$) as periodic in the horizontal direction if the periodicity coefficient (h) is higher than a periodicity threshold ($\theta$) having a value of at least 2;

- a vertical periodicity analyzer (506) configured to determine a periodicity of the two-dimensional Fourier Transform spectrum ($X_{mn}$) in a vertical direction by a vertical cepstrum vector calculator (504) configured to determine a vertical periodicity coefficient (v) by calculating a vertical cepstrum vector ($V_{1...\mu}$) of the two-dimensional Fourier Transform spectrum ($X_{mn}$) and dividing the value of the coefficient ($V_{\mu/2}$) of the vertical cepstrum vector ($V_{1...\mu}$) at the highest quefrency corresponding a half of a limit frequency $\mu$ by an average value (v) of the vertical cepstrum vector ($V_{1...\mu}$); and to determine the two-dimensional Fourier Transform spectrum ($X_{mn}$) as periodic in the vertical direction if the periodicity coefficient (v) is higher than the periodicity threshold ($\theta$);

- a video frame classifier (507) configured to classify the video frame as a horizontal left right type stereoscopic frame if the two-dimensional Fourier Transform spectrum ($X_{mn}$) is determined as periodic in the horizontal direction, and/or classifying the video frame as a vertical top bottom type stereoscopic frame if the two-dimensional Fourier Transform spectrum ($X_{mn}$) is determined as periodic in the vertical direction and classifying the video frame as a mono frame otherwise

- wherein the horizontal cepstrum vector ($H_{1...\mu}$) and the vertical cepstrum vector ($V_{1...\mu}$) of the two-dimensional Fourier Transform spectrum ($X_{mn}$) are calculated by calculating the Fourier transform of the log two-dimensional Fourier Transform spectrum ($X_{mn}$) according to the following equations:

$$H_{1...\mu} = \left| \mathrm{DFT}(\log(|X_{(1,1...\mu)}| + \varepsilon)) \right|$$

$$V_{1...\mu} = \left| \mathrm{DFT}(\log(|X_{(1...\mu,1)}| + \varepsilon)) \right|$$

wherein

$\varepsilon$ is a non-zero constant
$\mu$ is a limit frequency lower than the highest frequency of the two-dimensional Fourier Transform spectrum ($X_{mn}$);

- and wherein the average values ($\hat{H}$),($\hat{V}$) are calculated according to the following equations:

$$\hat{H} = \frac{1}{e - s} \sum_{i=s}^{e} |H_i|$$

$$\hat{V} = \frac{1}{e - s} \sum_{i=s}^{e} |V_i|$$

wherein
s and e are respectively the starting and ending coefficients which are different from respectively the first and the last coefficients of the respective cepstrum (H), (V).

**7.** The system according to claim 6, wherein the first cepstrum vector calculator (503) is configured to calculate the horizontal cepstrum vector ($H_{1...\mu}$) for the part of the two-dimensional Fourier Transform spectrum ($X_{mn}$) corresponding to vertical frequency equal to zero and the second cepstrum vector calculator (504) is configured to calculate the vertical cepstrum vector ($V_{1...\mu}$) for the part of the two-dimensional Fourier Transform spectrum ($X_{mn}$)

corresponding to horizontal frequency equal to zero.

8. The system according to claim 6, wherein the cepstrum vector calculators (503, 504) are configured to calculate the horizontal cepstrum vector ($H_{1...\mu}$) and/or the vertical cepstrum vector ($V_{1...\mu}$) for frequencies below the limit frequency $\mu$ lower than the highest frequency of the two-dimensional Fourier Transform spectrum ($X_{mn}$).

## Patentansprüche

1. Computerimplementiertes Verfahren zum Bestimmen eines Typs von einem Video-Einzelbild, umfassend den Schritt, eine Video-Einzelbild-Matrix zu empfangen, welche die Inhalte des Video-Einzelbilds beschreibt, **dadurch gekennzeichnet, dass** es weiter die Schritte umfasst:

   - ein zweidimensionales Fouriertransformation-Spektrum ($X_{mn}$) der Inhalte der Video-Einzelbild-Matrix zu berechnen,
   - zu bestimmen, ob das zweidimensionale Fouriertransformation-Spektrum ($X_{mn}$) periodisch in einer horizontalen Richtung ist, indem ein horizontale-Periodizität-Koeffizient (h) dadurch bestimmt wird, dass ein horizontaler Cepstrum-Vektor ($H_{1...\mu}$) des zweidimensionalen Fouriertransformation-Spektrums ($X_{mn}$) berechnet und der Wert des Koeffizienten ($H_{\mu/2}$) des horizontalen Cepstrum-Vektors ($H_{1...\mu}$) bei der höchsten Quefrenz, die einer Hälfte einer Grenzfrequenz $\mu$ entspricht, durch einen Mittelwert ($\hat{H}$) des horizontalen Cepstrum-Vektors ($H_{1...\mu}$) geteilt wird, wobei das zweidimensionale Fouriertransformation-Spektrum ($X_{mn}$) als periodisch in der horizontalen Richtung bestimmt wird, wenn der horizontale-Periodizität-Koeffizient (h) höher als ein Periodizität-Schwellenwert ($\theta$) ist, der einen Wert von mindestens 2 aufweist,
   - zu bestimmen, ob das zweidimensionale Fouriertransformation-Spektrum ($X_{mn}$) periodisch in einer vertikalen Richtung ist, indem ein vertikale-Periodizität-Koeffizient (v) dadurch bestimmt wird, dass ein vertikaler Cepstrum-Vektor ($V_{1...\mu}$) des zweidimensionalen Fouriertransformation-Spektrums ($X_{mn}$) berechnet und der Wert des Koeffizienten ($V_{\mu/2}$) des vertikalen Cepstrum-Vektors ($V_{1...\mu}$) bei der höchsten Quefrenz, die einer Hälfte einer Grenzfrequenz $\mu$ entspricht, durch einen Mittelwert (V) des vertikalen Cepstrum-Vektors ($V_{1...\mu}$) geteilt wird, wobei das zweidimensionale Fouriertransformation-Spektrum ($X_{mn}$) als periodisch in der vertikalen Richtung bestimmt wird, wenn der vertikale-Periodizität-Koeffizient (h) höher als der Periodizität-Schwellenwert ($\theta$) ist,
   - das Video-Einzelbild als stereoskopisches Einzelbild vom horizontalen links-rechts Typ zu klassifizieren, wenn das zweidimensionale Fouriertransformation-Spektrum ($X_{mn}$) als periodisch in der horizontalen Richtung bestimmt wird, oder/und das Video-Einzelbild als stereoskopisches Einzelbild vom vertikalen oben-unten Typ zu klassifizieren, wenn das zweidimensionale Fouriertransformation-Spektrum ($X_{mn}$) als periodisch in der vertikalen Richtung bestimmt wird, und ansonsten das Video-Einzelbild als Mono-Einzelbild zu klassifizieren,
   - wobei der horizontale Cepstrum-Vektor ($H_{1...\mu}$) und der vertikale Cepstrum-Vektor ($V_{1...\mu}$) des zweidimensionalen Fouriertransformation-Spektrums ($X_{mn}$) berechnet werden, indem die Fouriertransformation von dem Logarithmus des zweidimensionalen Fouriertransformation-Spektrums ($X_{mn}$) gemäß den folgenden Gleichungen berechnet wird:

$$H_{1...\mu} = \left| \mathrm{DFT}(\log(|X_{(1,1...\mu)}| + \varepsilon)) \right|$$

$$V_{1...\mu} = \left| \mathrm{DFT}(\log(|X_{(1...\mu,1)}| + \varepsilon)) \right|$$

   wobei $\varepsilon$ eine von Null verschiedene Konstante ist,

   $\mu$ eine Grenzfrequenz ist, die niedriger ist als die höchste Frequenz des zweidimensionalen Fouriertransformation-Spektrums ($X_{mn}$),
   und wobei die Mittelwerte ($\hat{H}$), (V) gemäß den folgenden Gleichungen berechnet werden

$$\hat{H} = \frac{1}{e-s} \sum_{i=s}^{e} |H_i|$$

$$\hat{V} = \frac{1}{e-s} \sum_{i=s}^{e} |V_i|$$

wobei s und e jeweils die Start- und End-Koefifizienten sind, die sich jeweils von den ersten und letzten Koeffizienten des jeweiligen Cepstrums (H), (V) unterscheiden.

2. Verfahren nach Anspruch 1, wobei der horizontale Cepstrum-Vektor ($H_{1...\mu}$) für den Teil des zweidimensionalen Fouriertransformation-Spektrums ($X_{mn}$) berechnet wird, welcher einer vertikalen Frequenz entspricht, die gleich Null ist, oder/und der vertikale Cepstrum-Vektor ($V_{1...\mu}$) für den Teil des zweidimensionalen Fouriertransformation-Spektrums ($X_{mn}$) berechnet wird, welcher einer horizontalen Frequenz entspricht, die gleich Null ist.

3. Verfahren nach Anspruch 1, wobei der horizontale Cepstrum-Vektor ($H_{1...\mu}$) oder/und der vertikale Cepstrum-Vektor ($V_{1...\mu}$) für Frequenzen unterhalb der Grenzfrequenz $\mu$ berechnet wird/werden, die niedriger ist als die höchste Frequenz des zweidimensionalen Fouriertransformation-Spektrums ($X_{mn}$).

4. Computer-Programm, umfassend Programmcode-Mittel, um alle die Schritte des computerimplementierten Verfahrens nach einem der Ansprüche 1 bis 3 durchzuführen, wenn das Programm auf einem Computer abläuft.

5. Computerlesbares Medium, welches von einem Computer ausführbare Anweisungen speichert, welche alle die Schritte des computerimplementierten Verfahrens nach einem der Ansprüche 1 bis 3 durchführen, wenn sie auf einem Computer ausgeführt werden.

6. System zum Bestimmen eines Typs von einem Video-Einzelbild, wobei das System eine Einzelbild-Leseeinrichtung (501) umfasst, die dazu konfiguriert ist, eine Video-Einzelbild-Matrix zu empfangen, die Inhalte des Video-Einzelbilds beschreibt,
**dadurch gekennzeichnet, dass** das System weiter umfasst:

- eine Fouriertransformation-Berechnungseinrichtung (502), die dazu konfiguriert ist, ein zweidimensionales Fouriertransformation-Spektrum ($X_{mn}$) der Inhalte der Video-Einzelbild-Matrix zu berechnen,
- eine Analyseeinrichtung (505) für eine horizontale Periodizität, die dazu konfiguriert ist, eine Periodizität des zweidimensionalen Fouriertransformation-Spektrums ($X_{mn}$) in einer horizontalen Richtung durch eine horizontaler-Cepstrum-Vektor-Berechnungseinrichtung (503) zu bestimmen, die dazu konfiguriert ist, einen horizontale-Periodizität-Koeffizient (h) dadurch zu bestimmen, dass ein horizontaler Cepstrum-Vektor ($H_{1...\mu}$) des zweidimensionalen Fouriertransformation-Spektrums ($X_{mn}$) berechnet und der Wert des Koeffizienten ($H_{\mu/2}$) des horizontalen Cepstrum-Vektors ($H_{1...\mu}$) bei der höchsten Quefrenz, die einer Hälfte einer Grenzfrequenz $\mu$ entspricht, durch einen Mittelwert (H) des horizontalen Cepstrum-Vektors ($H_{1...\mu}$) geteilt wird, und das zweidimensionale Fouriertransformation-Spektrum ($X_{mn}$) als periodisch in der horizontalen Richtung zu bestimmen, wenn der Periodizität-Koeffizient (h) höher als ein Periodizität-Schwellenwert ($\theta$) ist, der einen Wert von mindestens 2 aufweist,
- eine Analyseeinrichtung (506) für eine vertikale Periodizität, die dazu konfiguriert ist, eine Periodizität des zweidimensionalen Fouriertransformation-Spektrums ($X_{mn}$) in einer vertikalen Richtung durch eine vertikaler-Cepstrum-Vektor-Berechnungseinrichtung (504) zu bestimmen, die dazu konfiguriert ist, einen vertikale-Periodizität-Koeffizient (v) dadurch zu bestimmen, dass ein vertikaler Cepstrum-Vektor ($V_{1...\mu}$) des zweidimensionalen Fouriertransformation-Spektrums ($X_{mn}$) berechnet und der Wert des Koeffizienten ($V_{\mu/2}$) des vertikalen Cepstrum-Vektors ($V_{1...\mu}$) bei der höchsten Quefrenz, die einer Hälfte einer Grenzfrequenz $\mu$ entspricht, durch einen Mittelwert (V) des horizontalen Cepstrum-Vektors ($V_{1...\mu}$) geteilt wird, und das zweidimensionale Fouriertransformation-Spektrum ($X_{mn}$) als periodisch in der vertikalen Richtung zu bestimmen, wenn der Periodizität-Koeffizient (v) höher als der Periodizität-Schwellenwert ($\theta$) ist,
- eine Video-Einzelbild-Klassifizierungseinrichtung (507), die dazu konfiguriert ist, das Video-Einzelbild als stereoskopisches Einzelbild vom horizontalen links-rechts Typ zu klassifizieren, wenn das zweidimensionale Fouriertransformation-Spektrum ($X_{mn}$) als periodisch in der horizontalen Richtung bestimmt wird, oder/und das Video-Einzelbild als stereoskopisches Einzelbild vom vertikalen oben-unten Typ zu klassifizieren, wenn das zweidimensionale Fouriertransformation-Spektrum ($X_{mn}$) als periodisch in der vertikalen Richtung bestimmt wird, und ansonsten das Video-Einzelbild als Mono-Einzelbild zu klassifizieren,

- wobei der horizontale Cepstrum-Vektor ($H_{1...\mu}$) und der vertikale Cepstrum-Vektor ($V_{1...\mu}$) des zweidimensionalen Fouriertransformation-Spektrums ($X_{mn}$) berechnet werden, indem die Fouriertransformation von dem Logarithmus des zweidimensionalen Fouriertransformation-Spektrums ($X_{mn}$) gemäß den folgenden Gleichungen berechnet wird:

$$H_{1...\mu} = \left| \mathrm{DFT}(\log(\left|X_{(1,1...\mu)}\right| + \varepsilon)) \right|$$

$$V_{1...\mu} = \left| \mathrm{DFT}(\log(\left|X_{(1...\mu,1)}\right| + \varepsilon)) \right|$$

wobei $\varepsilon$ eine von Null verschiedene Konstante ist,
$\mu$ eine Grenzfrequenz ist, die niedriger ist als die höchste Frequenz des zweidimensionalen Fouriertransformation-Spektrums ($X_{mn}$),
und wobei die Mittelwerte ($\hat{H}$), ($\hat{V}$) gemäß den folgenden Gleichungen berechnet werden

$$\hat{H} = \frac{1}{e-s} \sum_{i=s}^{e} |H_i|$$

$$\hat{V} = \frac{1}{e-s} \sum_{i=s}^{e} |V_i|$$

wobei s und e jeweils die Start- und End-Koefifizienten sind, die sich jeweils von den ersten und letzten Koeffizienten des jeweiligen Cepstrums (H), (V) unterscheiden.

**7.** System nach Anspruch 6, wobei die erste Cepstrum-Vektor-Berechnungseinrichtung (503) dazu konfiguriert ist, den horizontalen Cepstrum-Vektor ($H_{1...\mu}$) für den Teil des zweidimensionalen Fouriertransformation-Spektrums ($X_{mn}$) zu berechnen, welcher einer vertikalen Frequenz entspricht, die gleich Null ist, und die zweite Cepstrum-Vektor-Berechnungseinrichtung (504) dazu konfiguriert ist, den vertikalen Cepstrum-Vektor ($V_{1...\mu}$) für den Teil des zweidimensionalen Fouriertransformation-Spektrums ($X_{mn}$) zu berechnen, welcher einer horizontalen Frequenz entspricht, die gleich Null ist.

**8.** System nach Anspruch 6, wobei die Cepstrum-Vektor-Berechnungseinrichtungen (503, 504) dazu konfiguriert sind, den horizontalen Cepstrum-Vektor ($H_{1...\mu}$) oder/und den vertikalen Cepstrum-Vektor ($V_{1...\mu}$) für Frequenzen unterhalb der Grenzfrequenz $\mu$ zu berechnen, die niedriger ist als die höchste Frequenz des zweidimensionalen Fouriertransformation-Spektrums ($X_{mn}$).

**Revendications**

**1.** Procédé mis en oeuvre par ordinateur pour déterminer un type d'image vidéo, comprenant l'étape de réception d'une matrice d'image vidéo décrivant des contenus de l'image vidéo,
**caractérisé en ce qu'**il comprend en outre les étapes suivantes :

- le calcul d'un spectre de transformée de Fourier à deux dimensions ($X_{mn}$) des contenus de la matrice d'image vidéo,
- la détermination du fait que le spectre de transformée de Fourier à deux dimensions ($X_{mn}$) est périodique dans une direction horizontale en déterminant un coefficient de périodicité horizontale (h) en calculant un vecteur cepstral horizontal ($H_{1...\mu}$) du spectre de transformée de Fourier à deux dimensions ($X_{mn}$) et en divisant la valeur du coefficient ($H_{\mu/2}$) du vecteur cepstral horizontal ($H_{1...\mu}$) à la plus haute quéfrence correspondant à une moitié d'une fréquence limite $\mu$ par une valeur moyenne ($\hat{H}$) du vecteur cepstral horizontal ($H_{1...\mu}$), le spectre de transformée de Fourier à deux dimensions ($X_{mn}$) étant déterminé comme périodique dans la direction horizontale si le coefficient de périodicité horizontale (h) est supérieur à un seuil de périodicité ($\theta$) ayant une valeur d'au moins 2,
- la détermination du fait que le spectre de transformée de Fourier à deux dimensions ($X_{mn}$) est périodique dans une direction verticale en déterminant un coefficient de périodicité verticale (v) en calculant un vecteur cepstral vertical ($V_{1...\mu}$) du spectre de transformée de Fourier à deux dimensions ($X_{mn}$) et en divisant la valeur du coefficient ($V_{\mu/2}$) du vecteur cepstral vertical ($V_{1...\mu}$) à la plus haute quéfrence correspondant à une moitié d'une fréquence limite $\mu$ par une valeur moyenne ($\hat{V}$) du vecteur cepstral vertical ($V_{1...\mu}$), le spectre de transformée de Fourier à deux dimensions ($X_{mn}$) étant déterminé comme périodique dans la direction verticale si le coefficient de périodicité verticale (h) est supérieur au seuil de périodicité ($\theta$),
- la classification de l'image vidéo comme une image stéréoscopique de type horizontal gauche droite si le spectre de transformée de Fourier à deux dimensions ($X_{mn}$) est déterminé comme périodique dans la direction horizontale et/ou la classification de l'image vidéo comme une image stéréoscopique de type vertical haut bas si le spectre de transformée de Fourier à deux dimensions ($X_{mn}$) est déterminé comme périodique dans la direction verticale et autrement la classification de l'image vidéo comme une mono-image ;
- le vecteur cepstral horizontal ($H_{1...\mu}$) et le vecteur cepstral vertical ($V_{1...\mu}$) du spectre de transformée de Fourier à deux dimensions ($X_{mn}$) étant calculés en calculant la transformée de Fourier du spectre de transformée de Fourier à deux dimensions ($X_{mn}$) logarithmique selon les équations suivantes :

$$H_{1...a} = |\mathrm{DFT}(\log(|X_{(1,1...a)}| + \varepsilon))|$$

$$V_{1...a} = |\mathrm{DFT}(\log(|X_{(1...a,1)}| + \varepsilon))|$$

où

$\varepsilon$ est une constante non nulle
$\mu$ est une fréquence limite inférieure à la plus haute fréquence du spectre de transformée de Fourier à deux dimensions ($X_{mn}$) ;

- et les valeurs moyennes ($\hat{H}$), ($\hat{V}$) étant calculées selon les équations suivantes :

$$\hat{H} = \frac{1}{e-s} \sum_{i=s}^{e} |H_i|$$

$$\hat{V} = \frac{1}{e-s} \sum_{i=s}^{e} |V_i|$$

où
s et e sont respectivement les coefficients de début et de fin qui sont différents respectivement du premier et du dernier coefficient du cepstre respectif (H), (V).

**2.** Procédé selon la revendication 1, dans lequel le vecteur cepstral horizontal ($H_{1\ldots\mu}$) est calculé pour la partie du spectre de transformée de Fourier à deux dimensions ($X_{mn}$) correspondant à une fréquence verticale égale à zéro et/ou le vecteur cepstral vertical ($V_{1\ldots\mu}$) est calculé pour la partie du spectre de transformée de Fourier à deux dimensions ($X_{mn}$) correspondant à une fréquence horizontale égale à zéro.

**3.** Procédé selon la revendication 1, dans lequel le vecteur cepstral horizontal ($H_{1\ldots\mu}$) et/ou le vecteur cepstral vertical ($V_{1\ldots\mu}$) est calculé pour des fréquences au-dessous de la fréquence limite $\mu$ inférieure à la plus haute fréquence du spectre de transformée de Fourier à deux dimensions ($X_{mn}$).

**4.** Programme d'ordinateur comprenant des moyens de code de programme pour effectuer toutes les étapes du procédé mis en oeuvre par ordinateur selon l'une quelconque des revendications 1 à 3 quand ledit programme est exécuté sur un ordinateur.

**5.** Support lisible par ordinateur stockant des instructions exécutables par ordinateur effectuant toutes les étapes du procédé mis en oeuvre par ordinateur selon l'une quelconque des revendications 1 à 3 quand elles sont exécutées sur un ordinateur.

**6.** Système pour déterminer un type d'image vidéo, le système comprenant un lecteur d'image (501) configuré pour recevoir une matrice d'image vidéo décrivant des contenus de l'image vidéo,
**caractérisé en ce que** le système comprend en outre :

- un calculateur de transformée de Fourier (502) configuré pour calculer un spectre de transformée de Fourier à deux dimensions ($X_{mn}$) des contenus de la matrice d'image vidéo,
- un analyseur de périodicité horizontale (505) configuré pour déterminer une périodicité du spectre de transformée de Fourier à deux dimensions ($X_{mn}$) dans une direction horizontale par un calculateur de vecteur cepstral horizontal (503) configuré pour déterminer un coefficient de périodicité horizontale (h) en calculant un vecteur cepstral horizontal ($H_{1\ldots\mu}$) du spectre de transformée de Fourier à deux dimensions ($X_{mn}$) et en divisant la valeur du coefficient ($H_{\mu/2}$) du vecteur cepstral horizontal ($H_{1\ldots\mu}$) à la plus haute quéfrence correspondant à une moitié d'une fréquence limite $\mu$ par une valeur moyenne ($H$) du vecteur cepstral horizontal ($H_{1\ldots\mu}$) ; et pour déterminer le spectre de transformée de Fourier à deux dimensions ($X_{mn}$) comme périodique dans la direction horizontale si le coefficient de périodicité (h) est supérieur à un seuil de périodicité ($\theta$) ayant une valeur d'au moins 2,
- un analyseur de périodicité verticale (506) configuré pour déterminer une périodicité du spectre de transformée de Fourier à deux dimensions ($X_{mn}$) dans une direction verticale par un calculateur de vecteur cepstral vertical (504) configuré pour déterminer un coefficient de périodicité verticale (v) en calculant un vecteur cepstral vertical ($V_{1\ldots\mu}$) du spectre de transformée de Fourier à deux dimensions ($X_{mn}$) et en divisant la valeur du coefficient ($V_{\mu/2}$) du vecteur cepstral vertical ($V_{1\ldots\mu}$) à la plus haute quéfrence correspondant à une moitié d'une fréquence limite $\mu$ par une valeur moyenne ($V$) du vecteur cepstral vertical ($V_{1\ldots\mu}$) ; et pour déterminer le spectre de transformée de Fourier à deux dimensions ($X_{mn}$) comme périodique dans la direction verticale si le coefficient de périodicité (v) est supérieur au seuil de périodicité ($\theta$),
- un classificateur d'image vidéo (507) configuré pour classifier l'image vidéo comme une image stéréoscopique de type horizontal gauche droite si le spectre de transformée de Fourier à deux dimensions ($X_{mn}$) est déterminé comme périodique dans la direction horizontale et/ou classifier l'image vidéo comme une image stéréoscopique de type vertical haut bas si le spectre de transformée de Fourier à deux dimensions ($X_{mn}$) est déterminé comme périodique dans la direction verticale et classifier autrement l'image vidéo comme une mono-image
- le vecteur cepstral horizontal ($H_{1\ldots\mu}$) et le vecteur cepstral vertical ($V_{1\ldots\mu}$) du spectre de transformée de Fourier à deux dimensions ($X_{mn}$) étant calculés en calculant la transformée de Fourier du spectre de transformée de Fourier à deux dimensions ($X_{mn}$) logarithmique selon les équations suivantes :

$$H_{1\ldots\mu} = |\mathrm{DFT}(\log(|X_{(1 1\ldots\mu)}| + \varepsilon))|$$

$$V_{1\ldots\mu} = |\mathrm{DFT}(\log(|X_{(1\ldots\mu,1)}| + \varepsilon))|$$

où

ε est une constante non nulle
μ est une fréquence limite inférieure à la plus haute fréquence du spectre de transformée de Fourier à deux
dimensions ($X_{mn}$) ;

- et les valeurs moyennes ($\hat{H}$), ($\hat{V}$) étant calculées selon les équations suivantes :

$$\hat{H} = \frac{1}{e-s}\sum_{i=s}^{e} |H_i|$$

$$\hat{V} = \frac{1}{e-s}\sum_{i=s}^{e} |V_i|$$

où
s et e sont respectivement les coefficients de début et de fin qui sont différents respectivement du premier et
du dernier coefficient du cepstre respectif (H), (V).

7. Système selon la revendication 6, dans lequel le premier calculateur de vecteur cepstral (503) est configuré pour calculer le vecteur cepstral horizontal ($H_{1...\mu}$) pour la partie du spectre de transformée de Fourier à deux dimensions ($X_{mn}$) correspondant à une fréquence verticale égale à zéro et le deuxième calculateur de vecteur cepstral (504) est configuré pour calculer le vecteur cepstral vertical ($V_{1...\mu}$) pour la partie du spectre de transformée de Fourier à deux dimensions ($X_{mn}$) correspondant à une fréquence horizontale égale à zéro.

8. Système selon la revendication 6, dans lequel les calculateurs de vecteur cepstral (503, 504) sont configurés pour calculer le vecteur cepstral horizontal ($H_{1...\mu}$) et/ou le vecteur cepstral vertical ($V_{1...\mu}$) pour des fréquences au-dessous de la fréquence limite μ inférieure à la plus haute fréquence du spectre de transformée de Fourier à deux dimensions ($X_{mn}$).

Fig. 1A

111

Fig. 1B

110

111

Fig. 1C

110

111

Fig. 1D

110

111

111
112

**Fig. 2A**

110
111
112

**Fig. 2B**

110
111
112

**Fig. 2C**

110
111
112

**Fig. 2D**

110
111
112

**Fig. 2E**

110
111
112

**Fig. 2F**

110
111
112

**Fig. 2G**

110
111
112

**Fig. 2H**

Fig. 3A

Fig. 3B

Fig. 3C

Fig. 3D

Fig. 3E

Fig. 3F

Fig. 3G

Fig. 3H

**Fig. 4**

**Fig. 5**

301 Scale-down frame

302 Discard color information

303 Determine non-active regions

304 Discard non-active regions

**Fig. 6**

**401**
Receive
input frame

**402**
Calculate 2-dimensional
Fourier transform

**403**
Calculate
cepstrum vector(s)

**404**
Measure
periodicity

**405**
Determine
frame type

**Fig. 7**

**Fig. 8A**

**Fig. 8B**

**Fig. 8C**

**Fig. 8D**

**Fig. 9A**

**Fig. 9B**

**Fig. 9C**

**Fig. 9D**

501 —— Frame reader

502 —— 2-dimensional FT calculator

503 —— Horizontal cepstrum vector calculator

504 —— Vertical cepstrum vector calculator

505 —— Periodicity analyzer

506 —— Periodicity analyzer

507 —— Frame type classifier

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090009508 A
- WO 2010014973 A

- US 2002163595 A

**Non-patent literature cited in the description**

- 3D Image format identification by image difference. Multimedia and Expo (ICME), 2010 IEEE International Conference. IEEE, 19 July 2010, 1415-1420